# EUROPEAN PATENT SPECIFICATION

(11) **EP 3 842 968 B1**
(45) Date of publication and mention of the grant of the patent: **24.04.2024**
(21) Application number: 19917423.6
(22) Date of filing: 27.02.2019
(51) Int. Cl.: G06F 21/31, G06F 3/02, G06F 11/34, G06N 20/20, G06N 20/10, G06N 5/01

(54) **METHOD AND SYSTEM FOR IDENTIFYING A USER ACCORDING TO KEYSTROKE DYNAMICS**
VERFAHREN UND SYSTEM ZUR IDENTIFIZIERUNG EINES BENUTZERS GEMÄSS DER TASTENANSCHLAGSDYNAMIK
PROCÉDÉ ET SYSTÈME D'IDENTIFICATION D'UN UTILISATEUR EN FONCTION DE SA MANIÈRE DE MANIPULER UN CLAVIER D'ORDINATEUR

(43) Date of publication of application: 30.06.2021
(73) Proprietor: "Group IB" Ltd., Moscow, 115088 (RU)
(72) Inventor: SLIPENCHUK, Pavel Vladimirovich, Moscow, 117437 (RU); YANKELEVICH, Dmitrij Arkadevich, Moscow, 117452 (RU)
(74) Representative: De Vries & Metman
(86) International application number: PCT/RU2019/000126
(87) International publication number: WO 2020/176005

(56) References cited:
- EP-B1- 2 477 136
- WO-A2-2007/128975
- GB-A- 2 437 100
- KR-A- 20090 022 682
- KR-A- 20190 018 197
- KR-B1- 100 923 179
- US-A1- 2013 263 240
- US-A1- 2013 343 616
- US-A1- 2015 169 854

## Description

### FIELD

This technical solution relates to the field of computing, in particular, to a method and system of user identification by the way of handling computer keyboard.

### BACKGROUND

The object of protecting information from unauthorized access is becoming increasingly important. The most reliable results are obtained using biometric authentication methods.

These include the following methods:
✔ voice recognition;
✔ face recognition;
✔ iris recognition;
✔ fingerprint recognition;
   - In addition, each person has their own keystroke dynamics (Keystroke Dynamics, keystroke biometrics, typing dynamics: https://en.wikipedia.org/wiki/Keystroke_dynamics). Wherein, the use of keystroke dynamics recognition has several advantages over other authentication methods. The fact is that for the recognition of keystroke dynamics does not require additional equipment, resulting in the low cost of implementing such a system. In addition, monitoring of keystroke dynamics can be performed continuously and imperceptibly for the user, without distracting his attention from the work process.

Keystroke dynamics are a display of a number of physiological, psychological and other characteristics of a particular person, expressed during work on a computer keyboard in various time intervals between elementary actions (pressing and releasing keys).

Human fingers are an extremely complex system that has the ability to flexibly adapted to external circumstances; however, in different circumstances, the time required for some elementary action, for example, pressing a certain key, will be different and will depend on what other elementary actions needed to be performed before and after this action.

On the other hand, computer keyboards, typically, have similar but different physical parameters, such as the distances between adjacent keys, the height of the keyboard, its angle of inclination relative to the table, the hardness of the key, etc. Due to the above facts, keystroke dynamics will be different not only for different people, but also for the same person typing text using different keyboards.

From the prior art there are widely known solutions that use keystroke dynamics to identify users, to the extent such solutions are described in the applications: WO2011039371A1, publ. 07.04.2011; GB2470579A, publ. 01.12.2010; US9590986B2, 07.03.2017; WO2017070600A1, 27.03.2017; US2015169854A1, 18.06.2015.

In addition, from the prior art there are known solutions that locally solve the issues of verifying the user's identity during interaction with the keyboard; they are disclosed in the following documents: EP2477136B1, WO2007128975A2, US2013263240A1 and US2015169854A1.

However, the solutions known from the prior art for identifying users by keystroke dynamics have limited functionality: these solutions do not calculate all possible time intervals between all keyboard events that occur during login and password typing.

### SUMMARY

The technical problem that the claimed technical solution addresses is the creation of a computer-implemented method and system of user identification by keystroke dynamics, which are described in the independent claims. Additional embodiments of this technique are presented in the dependent claims.

The technical result consists in the automatic user identification by keystroke dynamics.

The present invention is defined by the subject matter of the appended independent claims. Further advantageous aspects are disclosed with the dependent claims.

### DESCRIPTION OF THE DRAWINGS

Embodiment of the technique will be described hereinafter in accordance with the accompanying drawings, which are presented to explain the essence of the technique and in no way limit the scope of the technique. The following drawings are accompanying the application:
Fig. 1 illustrates a computer-implemented method of user identification by keystroke dynamics;
Fig. 2 illustrates the time intervals measured by the claimed method when entering data from the keyboard;
Fig. 3 illustrates non-limiting methods for conditionally dividing a computer keyboard into zones;
Fig. 4 illustrates an example of an overall schematic of a computer device.

### DETAILED DESCRIPTION

The following detailed description of the technique embodiment provides numerous embodiment details designed to provide a clear understanding of this technique. However, it will be obvious to those skilled in the art how to use this technique, with or without these embodiment details. In other cases, well-known methods, procedures, and components have not been described in detail in order not to obscure unnecessarily the features of this technique.

In addition, it will be clear from the foregoing that the technique is not limited to the said embodiment. Numerous possible modifications, changes, variations and substitutions that preserve the essence and form of this technique will be obvious to those skilled in the art.

This technique is intended to provide a computer-implemented method and system of user identification by keystroke dynamics.

The signal generated by any modern computer keyboard in response to pressing or releasing any single key uniquely identifies the pressed key. Moreover, the kind of this signal neither depends on how hard the key was pressed, nor on how quickly it was pressed, nor on how long it was held down before releasing, nor on other similar factors.

The output of the keyboard, on which some text is being typed, is a set of so-called scan codes (https://ru.wikipedia.org/w/index.php?title=%D0%A1%D0%BA%D0%B0%D0%BD-%D0%BA%D0%BE%D0%B4&oldid=98124315) successively transmitted in digital (binary) form through the port to which the keyboard is connected. Each of these scan codes uniquely identifies a particular key and, moreover, indicates whether the corresponding key was pressed or released. In other words, each key is assigned with at least two different scan codes:
- scan code of pressing,
- scan code of releasing.

Scan codes are unique within a specific computer configuration; they are transmitted by the keyboard to the port regardless of the state of the other input devices.

As a result, subsequent to pressing any key on the computer keyboard, the program that processes the state of the keyboard port becomes aware of: (1) the time of pressing, (2) the time of releasing, (3) information about which particular key was pressed or released. Fixing a specific time of pressing or releasing (timestamp) can be implemented in this case, for example, by the program access to the system clock data.

Before starting work on a computer, a new employee is informed of his credentials and instructed to enter a username and password 10-15 times in the user interface window. The number of required account input iterations for each specific user may be different, since depends not only on the experience of this user on the keyboard, but also on his "degree of acquaintance" with a specific keyboard.

In an alternative embodiment, the system implementing the claimed method is associated with a browser window in which the user has to enter the credentials, for example, a window of the remote banking service system or an online store site that has a personal account function and involves authorization of customers. In this case, the system implementing the claimed method receives keystrokes of a computer keyboard, calculates and saves the necessary data, which will be described below.

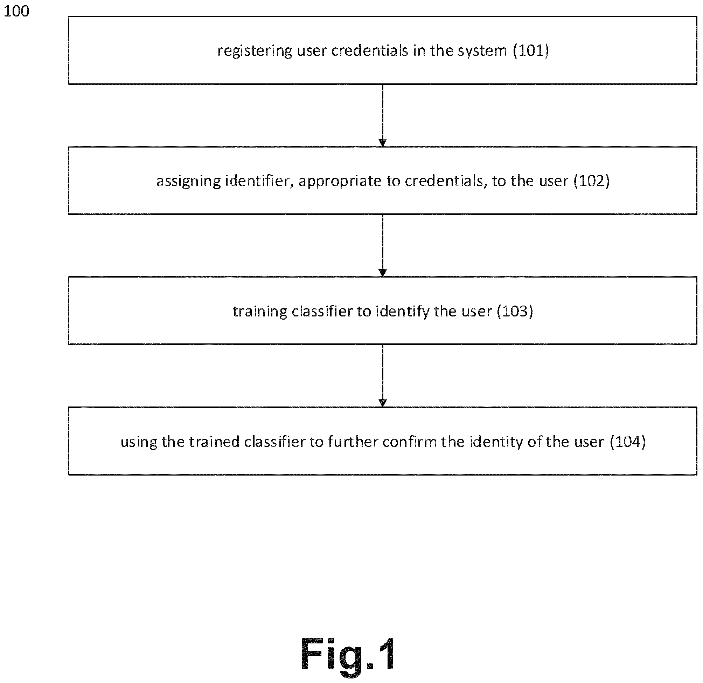

As represented in Fig. 1, the claimed computer-implemented method of user identification by keystroke dynamics (100) is implemented as follows:
At step (101), user credentials are pre-registered in the system.User credentials are username and password. This is an important component of network security.

Next, at step (102), an identifier corresponding to the credentials is assigned to the user. An arbitrary pseudonym ("Ivanov.I.I."), which does not coincide with the login and entered by the user upon the system's request at the beginning of training, as well as a pseudo-random number, for example, the hash function of the system time received at the time of pressing the first key when entering the first password with an accuracy of 0.001 seconds, can be used as an identifier of the user in the claimed solution.

In an alternative embodiment the identification of a particular user can be done, for example, by his user_id, i.e. a unique identifier assigned to each client by the system, for example, the remote banking service (RBS) system.

In order to further reduce the probability of data loss, the RBS system, having received the correct credentials and having associated a specific user_id with a given user session, can calculate any pre-set hash function from it and transfer it to the system that implements the claimed method, namely the user_id hash, and not user_id itself. It does not matter for the purposes of implementing this method how the user ID looks, it's only important that it be consistently repeated in each working session of a given user.

At step (103), the classifier is trained to identify the user, in addition during training the credentials are entered into the system from the keyboard a specified number of times, and during each input:
- The time each key is held down is measured and the measured values are recorded;
- The intervals between the time of pressing each key and each of the points of pressing all the other keys that are used by the user when entering credentials are measured and the measured values are recorded;
- The intervals between the time of releasing each key and each of the points of releasing all the other keys that are used by the user when entering credentials are measured and the measured values are recorded;
- The intervals between the time of pressing each key and each of the points of releasing all the other keys that are used by the user when entering credentials are measured and the measured values are recorded;
- The intervals between the time of releasing each key and each of the points of pressing all the other keys that are used by the user when entering credentials are measured and the measured values are recorded;
- At each entry, based on the measured time intervals, generating a user data set, which is assigned with an identifier associated with the corresponding user;
- Saving the generated data sets, associated with the corresponding user, in the database;
- Selecting the most stable features the database using the selection algorithm;
- The classifier is trained to identify the user when entering credentials into the system based on the selected most stable features.

At step (104), the trained classifier is used to further confirm the identity of the user who entered the credentials at login, to the user on whose data sets the classifier was trained.

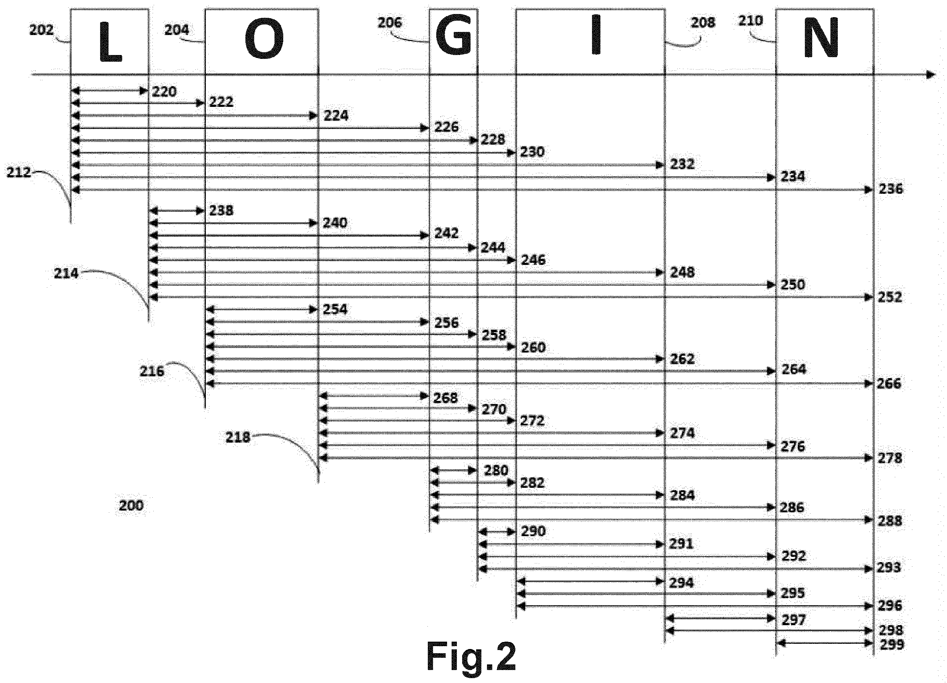

Let us show, with reference to Fig. 2, using the example with the entry of the word "LOGIN", how exactly the time intervals, which are subsequently used as features for training the classifier, can be calculated.

Fig. 2 shows a set of time intervals 200, which will be calculated by the claimed method when typing on the keyboard a sequence of keys L 202, O 204, G 206, I 208 and N 210. The time of pressing is fixed using the system clock for each of these keys, for example, the time of pressing 212 of the L 202 key or the time of pressing 216 of the O 204 key. The time of key releasing is also fixed using the system clock for each of these keys, for example, the time of releasing 214 of the L 202 key or the time of releasing 218 of the O 204 key.

The hold time of each key in the pressed state is measured: the hold time 220 of the L 202 key, the hold time 254 of the O 204 key, the hold time 280 of the G 206 key, the hold time 294 of the I 208 key, and the hold time 299 of the N 210 key.

The intervals between the time of pressing each key and each of the points of pressing all the other keys that are used by the user when entering credentials are measured. This can be done as follows: the intervals 222, 226, 230 and 234 between pressing 212 of the L 202 key and pressing the O 204, G 206, I 208 and N 210 keys, respectively, are measured. The intervals 256, 260 and 264 between pressing 216 of the O 204 key and pressing the G 206, I 208, and N 210 keys, respectively, are measured. The interval 222 between pressing L 202 and O 204 keys is not measured in this case, since it has already been measured earlier. The intervals 282 and 286 between pressing of the G 206 key and pressing the I 208 and N 210 keys, respectively, are measured. The interval 295 between the pressing of I 208 and N 210 keys is measured, and thus a complete set of intervals between the time each key is pressed and the time all other keys are pressed is obtained.

The intervals between the time of releasing each key and each of the points of releasing all the other keys that are used by the user when entering credentials are measured. This can be done as follows: the intervals 240, 244, 248 and 252 between the time of releasing 214 of the L 202 key and the time of releasing the O 204, G 206, I 208 and N 210 keys, respectively, are measured. This can be done as follows: the intervals 270, 274 and 278 between the time of releasing 218 of the O 204 key and the time of releasing the G 206, I 208 and N 210 keys, respectively, are measured. The interval 240 between the time of releasing of the L 202 and O 204 keys is not measured in this case, since it has already been measured earlier. The intervals 291 and 293 between the time of releasing of the G 206 key and the time of releasing the I 208 and N 210 keys, respectively, are measured. The interval 298 between the time of releasing the I 208 and N 210 keys is measured, and thus a complete set of intervals between the time each key is released and the time all other keys are released is obtained.

The intervals between the time of pressing each key and each of the time of releasing all the other keys that are used by the user when entering credentials are measured. This can be done as follows: the intervals 224, 228, 232 and 236 between the time of pressing 212 of the L 202 key and the time of releasing the O 204, G 206, I 208 and N 210 keys, respectively, are measured. The intervals 258, 262 and 266 between the pressing 216 of the O 204 key and the time of releasing the G 206, 1208 and N 210 keys, respectively, are measured. The interval 238 between pressing the O 204 key and releasing the L 202 key is not measured in this case, since it has already been measured earlier. The intervals 284 and 288 between pressing the G 206 key and the time of releasing the I 208 and N 210 keys, respectively, are measured. The interval 296 between pressing the I 208 key and the time of releasing the N 210 key is measured, and thus a complete set of intervals between the time each key is pressed and the time all other keys are released is obtained.

The intervals between the time of releasing each key and each of the points of pressing all the other keys that are used by the user when entering credentials are measured. This can be done as follows: the intervals 238, 242, 246 and 250 between the time of releasing 214 of the L 202 key and the time of pressing the O 204, G 206, I 208 and N 210 keys, respectively, are measured. The intervals 268, 272 and 276 between the time of releasing 218 of the O 204 key and the time of pressing the G 206, I 208 and N 210 keys, respectively, are measured. The interval 224 between the time of releasing the O 204 key and the time of pressing the L 202 key is not measured in this case, since it has already been measured earlier. The intervals 290 and 292 between the time of releasing of the G 206 key and the time of pressing the I 208 and N 210 keys, respectively, are measured. The interval 297 between the time of releasing the I 208 key and the time of pressing the N 210 key is measured, and thus a complete set of intervals between the time each key is released and the time all other keys are pressed is obtained.

The measurement of the time interval in this case means the calculation of the difference between the two stamps of the system clock (timestamp), obtained upon reception of the corresponding scan codes.

The time value can be measured, for example, with an accuracy of 0.01 second and expressed in decimal, hexadecimal or any other convenient format; the values obtained can, in particular, be saved in a specific user data set file. The sequence number of the interval may not be recorded, because it follows from the place of the measured value in the range of the remaining values of the set.

A non-limiting example of the sequence in which time intervals can be calculated and the values obtained are saved is given below with reference to Fig. 2.

At the time of pressing 212 of the first key - which is L 202 - the first stamp of the system clock is fixed. At the time of releasing 214 of the L 202 key, the second stamp of the system clock is fixed, the interval 220 between the first and second stamps of the system clock is calculated and the obtained value is saved. At the moment of pressing 216 of the O 204 key, the third stamp of the system clock is fixed, the time intervals 222 between the first and third stamps of the system clock and 238 between the second and third stamps of the system clock are calculated, and the obtained values are saved. At the time of releasing 218 the O 204 key, the fourth stamp of the system clock is fixed, the following time intervals are calculated: 224 between the first and fourth stamps of the system clock, 240 between the second and fourth stamps of the system clock, 254 between the third and fourth stamps of the system clock and the obtained values are saved. Further calculations are made similarly.

It should be noted that when working on the keyboard, some users sometimes press the "next" key before releasing the "previous" key. In this case, with reference to Fig. 2, the time of pressing the second key 216 will be closer to the start of typing 212 than the time of releasing the first key 214. This feature of working on the keyboard will only affect the amount of the corresponding time intervals (220, 222, 238, etc.). This feature of the user will not affect neither the total number of time intervals measured for the characters that make up the login and password, nor the functioning of the system that implements the claimed method. However, the fact that the measured time intervals in this case will have completely different values than for users with the usual way of typing allows us to speak of greater reliability of identification by the claimed method.

In addition to the keys corresponding to the "meaningful", i.e. applicable when entering login and password with characters, all computer keyboards have a number of service keys. Some of them, such as the Ctrl key, do not affect character input in the text field. Therefore, the receipt of scan codes of such keys within the scope of the claimed method can be ignored. In alternative implementation of the method, the scan codes of non-alphabetical keys can be processed similarly to the scan codes of the keys corresponding to the characters.

Other service keys, such as Del or Backspace, are always used only when the user, typing characters, made a mistake and would like to delete the character just entered.

Wherein, given that the Backspace key deletes the character to the left of the current position of the text cursor, the receipt of the scan code of this key means that the previous character was entered incorrectly.

Within the scope of the implementation of the claimed method, this may lead to the removal of the part of the generated keyboarding, in the calculation of which this previous character was previously involved, and the continuation of the calculation of the keyboarding operation, starting from the next character after Backspace, which will be considered "instead of" erroneously entered. Actually, the backspace scan code is ignored when calculating a keyboarding operation.

If the user presses Backspace several times, then the corresponding part of the already calculated keyboarding operation can be deleted, up to its complete zeroing if the number of presses on the Backspace was greater than or equal to the number of characters already entered.

Since the Del key deletes a character located to the right of the text cursor, in order to delete the last entered character with this key, the user first presses the "left arrow" service key and then Del.

Therefore, the receipt of scan codes of the "left arrow" and Del keys sequentially is processed similarly to the case with the receipt of a Backspace scan-code. Actually, the scan codes of the "left arrow" and Del keys are ignored when calculating keyboarding operation. Combinations of scan codes in the form of "X pressing the "left arrow", then X pressing Del" are processed in the same way as the situation described above, when the Backspace key is pressed X times in a row.

The Enter key in the authorization interfaces is often used to confirm the login and password entered in the text fields, i.e. serves as the "Enter the typed login and password" command. Therefore, the receipt of the scan-code of the Enter key can, along with other features, serve for the system implementing the claimed method, a signal that the calculation of the current keyboarding operation should be completed, and the obtained values be saved to a file.

A user data set, which is assigned with an identifier associated with the corresponding user, is generated by the subsystem at each entry, based on the successful input of the login and password. In addition, in cases where the user makes a mistake by entering incorrect credentials, the subsystem may ask him to repeat the data entry, displaying the appropriate message.

Each newly generated data set is saved in a database. After that, the most stable features are selected from the database using the selection algorithm, that is, such time intervals between different keyboard events that most often have similar values.

The algorithm for selecting the most stable features can be any well-known one. A non-limiting example of such an algorithm is given below. Suppose there are 10 data sets {K} of one user, each comprising the same number of features t(k):
{K1} = {t1(1); t1(2), t1(3)... ...t1(K)};
{K1} = {t2(1); t2(2), t2(3)... ...t2(K)};
...
{K10} = {t10(1); t10(2), t10(3)... ...t10(K)};

The value of the dispersion D for each set of "homogeneous" features, i.e. located at the same position within the {K} data set, is calculated:
D(1) = D({t1(1); t2(1), t3(1); t4(1).... t10(1)});
D(2) = D({t1(2); t2(2), t3(2); t4(2).... t10(2)});
...
D(K) = D({t1(K); t2(K), t3(K); t4(K).... t10(K)});

The dispersion D can be calculated as a variance, or by any other well-known method.

Then a pre-set number (for example, 50 or 200) of t(k) features with minimal dispersion is selected.

The described example of the method for selecting features is non-limiting. Alternatively, any other known method of feature extraction can be used: https://ru.wikipedia.org/w/index.php?title=%D0%92%D1%8B%D0%B4%D0%B5%D0%BB% D0%B5%D0%BD%D0%B8%D0%B5_%D0%BF%D1%80%D0%B8%D0%B7%D0%BD%D0 %B0%D0%B A%D0%BE%D0%B2&oldid=98135923

The classifier is trained to identify the user when entering credentials into the system based on the selected most stable features. Whereafter, the trained classifier is used to further confirm the identity of the user who entered the credentials at login, to the user on whose data sets this classifier was trained.

The technical embodiment of the classifier can be any well-known one; it can be implemented, for example, as Isolation Forest or as One Class SVM.

Additional embodiments of this technique are given below.

In the particular embodiment, after training the classifier, a threshold value is selected, the excess of which indicates the identity of the user who enters the credentials, on whose data sets the classifier was trained.

In another particular embodiment, when a trained classifier response that is numerically smaller than the selected threshold value is received, an access to the credentials of an unidentified user is being informed.

In another particular embodiment, when typing in the credentials, the presses of the non-character keys are additionally recorded.

In another particular embodiment, the classifier is trained by the method of machine learning.

In another particular embodiment, time intervals with the least variance in the data sets of this user are considered stable features for each user.

In another particular embodiment, the sift of a pre-set number of features that have the greatest variance in the data sets of the corresponding user is used as a selection algorithm.

There is a possible alteration of the system that implements the claimed method, in which the system is an integral part of a web site that involves the authorization of users, for example, an online store or a portal of public services.

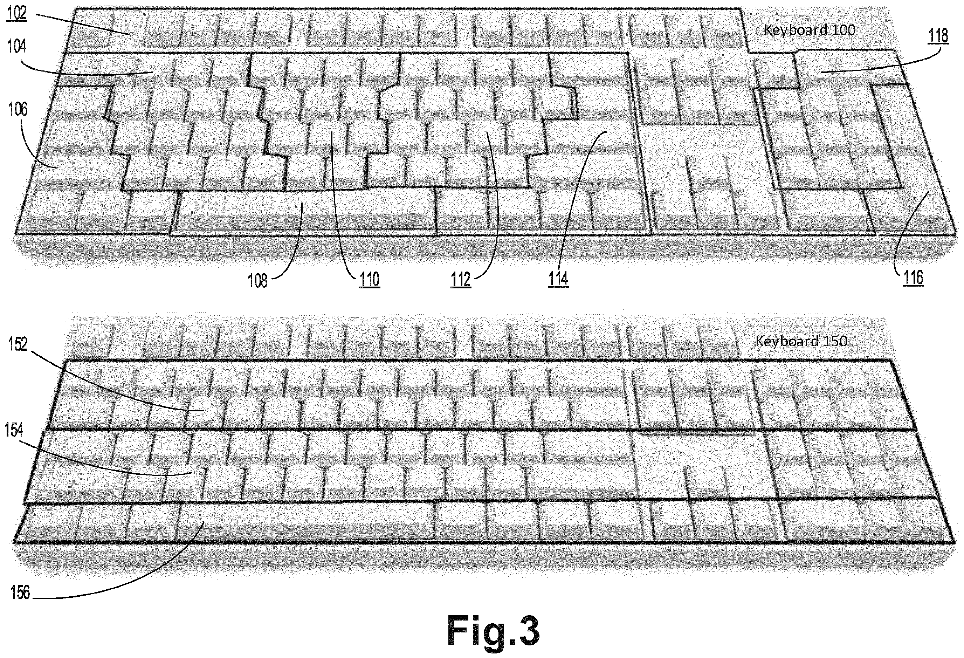

It is also possible embodiment of this method in which the keyboard is preliminary conventionally divided into two or more areas of keyboarding operations. Non-limiting examples of such a division are shown in Fig. 3.

For example, the keyboard 300 is divided into the service key area 302, the left area of the alphanumeric block 304, the middle area of the alphanumeric block 310, the right area of the alphanumeric block 312, the left 306 and the right 314 areas of the modifier keys, the space bar area 308, the numeric keypad area 318 and the service key area of the numeric keypad 316.

Alternatively, the keyboard 350 is divided into an upper area 352, a middle area 354 and a lower area 356.

In accordance with this embodiment, the time intervals fixed for the keys from each pre-selected keyboarding operation zone are additionally multiplied by a factor, also pre-set and assigned to the given keyboarding operation zone, before training the classifier.

For example, as applied to the keyboard 350, the time intervals for the keys of the upper area 352 are multiplied by 10, the time intervals for the keys of the middle area 354 remain unchanged (multiplied by 1), and the time intervals for the keys of the lower area 356 are multiplied by 0.1.

There is also a possible embodiment of the claimed method, which is used in a situation where a specific account (in other words, login and password) is assigned not to one user, but to a certain, previously known group of persons. For example, students of the same class of secondary school, students of the same study group, etc. In such an implementation of the claimed method, all persons entitled to use this account are alternately trained, as described with reference to steps 101 and 102 shown in Fig. 1. After time intervals have been measured and saved for all, as has been shown with reference to Fig. 2, feature selection, using any well-known feature extraction method, and then classifier training are performed. A classifier trained in this way is subsequently used to identify this group of persons. The decision of the classifier in this case is interpreted as the probability that the person entering the credentials belongs to this group of persons.

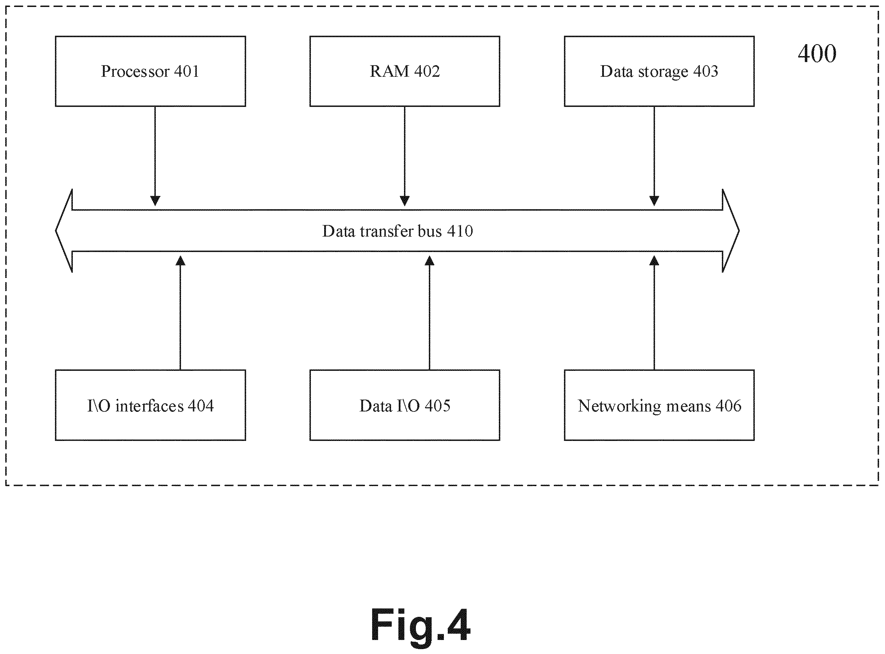

An Overall schematic of a computer device (400) that provides the data processing necessary for the implementation of the claimed solution will be presented in Fig. 4.

In general, the device (400) comprises such components as: one or more processors (401), at least one memory (402), data storage means (403), input/output interfaces (404), I/O means (405), networking means (406).

The processor (401) of the device performs the basic computational operations necessary for the operation of the device (400) or the functionality of one or more of its components. The processor (401) runs necessary machine-readable commands comprised in the RAM (402).

The memory (402) typically is made in the form of RAM and comprises the necessary program logic that provides the required functionality.

The data storage means (403) can be made in the form of HDD, SSD disks, RAID array, network storage, flash memory, optical information storage devices (CD, DVD, MD, Blue-Ray disks), etc. The means (403) allows long-term storage of various types of information, for example, the aforementioned files with user data sets, a database comprising records of time intervals measured for each user, user identifiers, etc.

The interfaces (404) are standard means for connecting and working with a server part, such as USB, RS232, RJ45, LPT, COM, HDMI, PS/2, Lightning, FireWire, etc.

The choice of the interfaces (404) depends on the specific design of the device (400), which can be a personal computer, mainframe, server cluster, thin client, smartphone, laptop, etc.

A keyboard should be used as a means of data I/O (405) in any embodiment of the system that implements the claimed method. The hardware embodiment of the keyboard can be any known one: it can be either a built-in keyboard used on a laptop or netbook, or a separate device connected to a desktop computer, server, or other computer device. The connection can be either wired, in which the keyboard connecting cable is connected to the PS/2 or USB port located on the desktop computer's system unit, or wireless, in which the keyboard communicates via wireless channel, for example, a radio channel, with a base station, which, in turn, is directly connected to the system unit, for example, to one of the USB ports. In addition to the keyboard, the following can also be used as the means of data I/O: a joystick, a display (touch screen), a projector, a touchpad, a mouse, a trackball, a light pen, speakers, microphone, etc.

The networking means (406) are selected from the device that provides network reception and transmission of data, for example, Ethernet card, WLAN/Wi-Fi module, Bluetooth module, BLE module, NFC module, IrDa, RFID module, GSM modem, etc. With the use of the means (405), the data exchange via wired or wireless data transmission channel, for example, WAN, PAN, LAN (LAN), Intranet, Internet, WLAN, WMAN or GSM is provided.

The components of the device (400) are interfaced by means of a common data transfer bus (410).

## Claims

1. A method of user identification by keystroke dynamics, the method performing using a computing device, the method comprising:
- registering user credentials in the system;
- assigning an identifier, corresponding to credentials, to the user;
- training a classifier to identify the user, wherein, during training, the user enters credentials into the system from a keyboard a specified number of times, wherein keys of the keyboard are pre-divided into two or more areas and wherein time intervals are fixed for keys from each area of the keyboard and wherein the time intervals are additionally multiplied by a factor, pre-set and assigned to a given area, before training the classifier;
wherein during each input:
• Measuring time each key is held down;
• Measuring intervals between the time of pressing each key and each of the points of pressing all the other keys that are used by the user when entering credentials;
• Measuring intervals between the time of releasing each key and each of the points of releasing all the other keys that are used by the user when entering credentials;
• Measuring intervals between the time of pressing each key and each of the points of releasing all the other keys that are used by the user when entering credentials;
• Measuring intervals between the time of releasing each key and each of the points of pressing all the other keys that are used by the user when entering credentials;
• At each entry, based on the measured time intervals, generating a user data set, which is assigned with an identifier associated with the corresponding user;
• Saving the generated data sets, associated with the corresponding user, in a database;
• Selecting a data set having time intervals with the least variance using a selection algorithm;
• Training classifier trained to identify the user when entering credentials into the system based on the selected data set;
- using the trained classifier to further confirm the identity of the user who entered the credentials at login, on whose data sets the classifier was trained.

2. The method of claim 1, wherein after training the classifier, a threshold value is selected, the excess of which indicates the identity of the user who enters the credentials to be the user on whose data sets the classifier was trained.

3. The method of claim 2, wherein when a trained classifier response that is numerically smaller than the selected threshold value is received, an access to the credentials of an unidentified user is being informed.

4. The method of claim 1, wherein when typing in the credentials, the presses of non-character keys are additionally recorded.

5. The method of claim 1, wherein the classifier is trained by the method of machine learning.

6. The method of claim 1, wherein the time intervals with the least variance in the data sets of this user are considered stable features for each user.

7. The method of claim 1, wherein the user identification is understood to be the identification of a pre-set group of persons using the same account.

8. A system of user identification by keystroke dynamics, the system comprising:
- keyboard;
- unit for registration of user credentials in the system;
- system clock configured to fix the pressing time and the release time of the keyboard keys;
- long-term memory configured to store the database;
- computing device configured to perform the method according to any of claims 1-7.

9. The system of claim 8, wherein the system of user identification by keystroke dynamics is an integral part of a remote banking service system.

10. The system of claim 8, wherein the system of user identification is an integral part of a website, which involves user authorization.

## Patentansprüche

1. Verfahren zur Benutzeridentifikation durch Tastendruckdynamik, wobei das Verfahren unter Verwendung eines Computergeräts durchgeführt wird, wobei das Verfahren umfasst:
- die Registrierung der Benutzerdaten im System;
- Zuweisung eines Identifikators, der den Anmeldeinformationen entspricht, an den Benutzer;
- Trainieren eines Klassifizierers, um den Benutzer zu identifizieren, wobei der Benutzer während des Trainings eine bestimmte Anzahl von Malen Anmeldeinformationen über eine Tastatur in das System eingibt, wobei die Tasten der Tastatur im Voraus in zwei oder mehr Bereiche unterteilt werden und wobei Zeitintervalle für Tasten aus jedem Bereich der Tastatur festgelegt werden und wobei die Zeitintervalle zusätzlich mit einem Faktor multipliziert werden, der im Voraus festgelegt und einem gegebenen Bereich zugewiesen wird, bevor der Klassifizierer trainiert wird; wobei während jeder Eingabe ausgeführt wird:
• Messung der Zeit, die jede Taste gedrückt gehalten wird;
• Messung der Intervalle zwischen dem Drücken jeder Taste und dem Drücken aller anderen Tasten, die der Benutzer bei der Eingabe von Anmeldeinformationen verwendet;
• Messung der Intervalle zwischen dem Loslassen der einzelnen Tasten und dem Loslassen aller anderen Tasten, die der Benutzer bei der Eingabe von Anmeldedaten verwendet;
• Messung der Intervalle zwischen dem Drücken jeder Taste und dem Loslassen aller anderen Tasten, die der Benutzer bei der Eingabe von Anmeldedaten verwendet;
• Messung der Intervalle zwischen dem Loslassen der einzelnen Tasten und dem Drücken aller anderen Tasten, die der Benutzer bei der Eingabe von Anmeldeinformationen verwendet;
• Bei jedem Eintrag wird auf der Grundlage der gemessenen Zeitintervalle ein Benutzerdatensatz erzeugt, dem eine dem jeweiligen Benutzer zugeordnete Kennung zugewiesen wird;
• Speichern der erzeugten Datensätze, die dem entsprechenden Benutzer zugeordnet sind, in einer Datenbank;
• Auswahl eines Datensatzes mit Zeitintervallen mit der geringsten Varianz unter Verwendung eines Auswahlalgorithmus;
• Training des Klassifikator, der trainiert wird, um den Benutzer bei der Eingabe von Anmeldeinformationen in das System auf der Grundlage des ausgewählten Datensatzes zu identifizieren;
- Verwenden des trainierten Klassifikators, um die Identität des Benutzers, der die Anmeldedaten bei der Anmeldung eingegeben hat, weiter zu bestätigen, auf dessen Datensätze, auf denen der Klassifikator trainiert wurde.

2. Verfahren nach Anspruch 1, wobei nach dem Training des Klassifikators ein Schwellenwert ausgewählt wird, dessen Überschreitung die Identität des Benutzers, der die Anmeldedaten eingibt, als den Benutzer ausweist, auf dessen Datensätzen der Klassifikator trainiert wurde.

3. Verfahren nach Anspruch 2, wobei, wenn eine trainierte Klassifikatorsantwort, die numerisch kleiner als der ausgewählte Schwellenwert ist, empfangen wird, ein Zugriff auf die Anmeldeinformationen eines nicht identifizierten Benutzers mitgeteilt wird.

4. Verfahren nach Anspruch 1, wobei bei der Eingabe der Anmeldedaten zusätzlich die Betätigung von Nicht-Zeichen-Tasten aufgezeichnet wird.

5. Verfahren nach Anspruch 1, wobei der Klassifikator durch das Verfahren des maschinellen Lernens trainiert wird.

6. Verfahren nach Anspruch 1, wobei die Zeitintervalle mit der geringsten Varianz in den Datensätzen dieses Benutzers als stabile Merkmale für jeden Benutzer angesehen werden.

7. Verfahren nach Anspruch 1, wobei unter der Benutzeridentifikation die Identifikation einer voreingestellten Gruppe von Personen zu verstehen ist, die dasselbe Konto benutzen.

8. System zur Benutzeridentifikation durch Tastendruckdynamik, wobei das System Folgendes umfasst:
- eine Tastatur;
- eine Einheit für die Registrierung von Benutzeranmeldeinformationen im System;
- eine Systemuhr, die so konfiguriert ist, dass sie den Zeitpunkt des Drückens und des Loslassens der Tasten der Tastatur festlegt;
- einen Langzeitspeicher, der für die Speicherung der Datenbank konfiguriert ist;
- eine Computervorrichtung, die so konfiguriert ist, dass sie das Verfahren nach einem der Ansprüche 1-7 durchführt.

9. System nach Anspruch 8, wobei das System der Benutzeridentifikation durch Tastendruckdynamik ein integraler Bestandteil eines entfernten Bank-Service-Systems ist.

10. System nach Anspruch 8, wobei das System zur Benutzeridentifizierung ein integraler Bestandteil einer Website ist, die eine Benutzerautorisierung umfasst.

## Revendications

1. Procédé d'identification d'utilisateur par sa manière de manipuler un clavier d'ordinateur, le procédé réalisant l'utilisation d'un dispositif informatique, le procédé comprenant :
- l'enregistrement d'accréditations d'utilisateur dans le système ;
- l'assignation d'un identifiant, correspondant à des accréditations, à l'utilisateur ;
- l'entraînement d'un classifieur pour identifier l'utilisateur, dans lequel, durant l'entraînement, l'utilisateur entre des accréditations dans le système à partir d'un clavier un nombre spécifié de fois, dans lequel des touches du clavier sont divisées au préalable en deux zones ou plus et dans lequel des intervalles de temps sont fixés pour des touches à partir de chaque zone du clavier et dans lequel les intervalles de temps sont en plus multipliés par un facteur, prédéfini et assigné à une zone donnée, avant l'entraînement du classifieur ; dans lequel durant chaque saisie :
• La mesure du temps pendant lequel chaque touche est maintenue enfoncée ;
• La mesure d'intervalles entre le moment d'appui sur chaque touche et chacun des points d'appui sur toutes les autres touches qui sont utilisées par l'utilisateur lors de l'entrée d'accréditations ;
• La mesure d'intervalles entre le moment de relâchement de chaque touche et chacun des points de relâchement de toutes les autres touches qui sont utilisées par l'utilisateur lors de l'entrée d'accréditations ;
• La mesure d'intervalles entre le moment d'appui sur chaque touche et chacun des points de relâchement de toutes les autres touches qui sont utilisées par l'utilisateur lors de l'entrée d'accréditations ;
• La mesure d'intervalles entre le moment de relâchement de chaque touche et chacun des points d'appui sur toutes les autres touches qui sont utilisées par l'utilisateur lors de l'entrée d'accréditations ;
• À chaque entrée, sur la base des intervalles de temps mesurés, la génération d'un jeu de données d'utilisateur, qui est assigné avec un identifiant associé à l'utilisateur correspondant ;
• La sauvegarde des jeux de données générés, associés à l'utilisateur correspondant, dans une base de données ;
• La sélection d'un jeu de données ayant des intervalles de temps avec la variance minimale en utilisant un algorithme de sélection ;
• L'entraînement du classifieur entraîné pour identifier l'utilisateur lors de l'entrée d'accréditations dans le système sur la base du jeu de données sélectionné ;
- l'utilisation du classifieur entraîné pour confirmer encore l'identité de l'utilisateur qui a entré les accréditations à la connexion, sur les jeux de données duquel le classifieur a été entraîné.

2. Procédé selon la revendication 1, dans lequel après l'entraînement du classifieur, une valeur seuil est sélectionnée, dont l'excès indique que l'identité de l'utilisateur qui entre les accréditations est l'utilisateur sur les jeux de données duquel le classifieur a été entraîné.

3. Procédé selon la revendication 2, dans lequel lorsqu'une réponse de classifieur entraîné qui est numériquement plus faible que la valeur seuil sélectionnée est reçue, l'information concernant un accès aux accréditations d'un utilisateur non identifié est donnée.

4. Procédé selon la revendication 1, dans lequel lorsque les accréditations sont tapées, les appuis sur des touches sans caractère sont enregistrés en plus.

5. Procédé selon la revendication 1, dans lequel le classifieur est entraîné par le procédé d'apprentissage machine.

6. Procédé selon la revendication 1, dans lequel les intervalles de temps avec la variance minimale dans les jeux de données de cet utilisateur sont considérés comme des caractéristiques stables pour chaque utilisateur.

7. Procédé selon la revendication 1, dans lequel il est entendu que l'identification d'utilisateur est l'identification d'un groupe prédéfini de personnes utilisant le même compte.

8. Système d'identification d'utilisateur par sa manière de manipuler un clavier d'ordinateur, le système comprenant :
- un clavier ;
- une unité pour l'enregistrement d'accréditations d'utilisateur dans le système ;
- une horloge système configurée pour fixer le moment d'appui et le moment de relâchement des touches de clavier ;
- une mémoire à long terme configurée pour stocker la base de données ;
- un dispositif informatique configuré pour réaliser le procédé selon l'une quelconque des revendications 1 à 7.

9. Système selon la revendication 8, dans lequel le système d'identification d'utilisateur par sa manière de manipuler un clavier d'ordinateur fait partie intégrante d'un système de services bancaires à distance.

10. Système selon la revendication 8, dans lequel le système d'identification d'utilisateur fait partie intégrante d'un site Web, ce qui implique une autorisation d'utilisateur.
